# EUROPEAN PATENT SPECIFICATION

(11) **EP 0 931 774 B1**
(45) Date of publication and mention of the grant of the patent: **31.10.2001**
(21) Application number: 99101050.5
(22) Date of filing: 22.01.1999
(51) Int. Cl.: C03C 25/34, C08J 5/08

(54) **Glass fiber cord for reinforcing a rubber**
Glasfaser-Cord zur Verstärkung von Gummi
Cordon de fibres en verre pour le renforcement du caoutchouc

(30) Priority: 23.01.1998 JP 1129998
(43) Date of publication of application: 28.07.1999
(73) Proprietor: Nippon Sheet Glass Co., Ltd., Osaka-shi, Osaka 541-8559 (JP)
(72) Inventor: Akiyama, Mitsuharu, 4902 Takachayakomori-cho, Tsu-shi, Mie (JP)
(74) Representative: HOFFMANN - EITLE

(56) References cited:
- EP-A- 0 575 088
- EP-A- 0 624 557
- US-A- 5 501 643
- US-A- 5 531 649
- DATABASE WPI Section Ch, Week 8622 Derwent Publications Ltd., London, GB; Class A95, AN 86-140539 XP002101258 -& JP 61 075836 A (NAKAZUMI T) , 18 April 1986

## Description

### FIELD OF THE INVENTION

The present invention relates to a glass fiber cord having excellent heat resistance, flexing resistance and water resistance, which is used for the reinforcement of rubber products such as rubber belts and tires.

### BACKGROUND OF THE INVENTION

Reinforcing fibers including glass fibers are extensively used as reinforcement materials for rubber products such as rubber belts and tires.

Rubber products such as rubber belts suffer flexural fatigue because flexing stresses are repeatedly imposed thereon, and thus come to have reduced performances. Namely, the flexural fatigue tends to cause reinforcement/matrix rubber debonding or to wear the reinforcing fibers, resulting in reduced strength. Toothed belts used for camshaft driving in automotive internal-combustion engines have recently come to be required not only to drive the camshaft but to serve as an auxiliary means for driving an injection pump, etc. The toothed belts are hence required to have high strength so as to withstand such a high load.

Under these circumstances, high-strength glass fibers have come to be mainly used for belt reinforcement. In JP-A-U-1-111848 (the term "JP-A-U" as used herein means an "unexamined published Japanese utility model application") is proposed a toothed belt having a core obtained by binding high-strength glass fiber filaments having a diameter of from 6 to 8 µm to form a strand, primary twisting a given number of such strands together to form a twisted yarn comprising from 500 to 800 filaments, and secondary twisting from 9 to 12 such twisted yarns together in the direction opposite to the primary twist direction. Another document dealing with toothed belts is US 5,531,649. The belts as disclosed therein have a specific construction and contain load carrying cords made of glass filaments, which may be treated with a rubber compound and/or RTL liquid.

Various glass fiber strand treatments have also been proposed which have the improved ability to enhance affinity and adhesion between reinforcing fibers and a rubber so as to prevent the debonding caused by flexural fatigue and to thus obtain a sufficient reinforcing effect.

For example, JP-A-1-221433 (the term "JP-A" as used herein means an "unexamined published Japanese patent application") proposes a treatment comprising a combination of a water-soluble resorcinol/formaldehyde condensate, a vinylpyridine/butadiene/styrene terpolymer latex, a dicarboxylated butadiene/styrene copolymer latex, and a chlorosulfonated polyethylene latex.

JP-A-63-270877 proposes a composition consisting mainly of a water-soluble resorcinol/formaldehyde condensate and a highly saturated polymer rubber containing nitrile groups and having an iodine value of 120 or lower.

Furthermore, JP-A-63-126975 proposes a method for treatment which comprises treating glass fiber strands with a first fluid comprising a vinylpyridine/styrene/butadiene terpolymer latex, a rubber latex, and a water-soluble resorcinol/formaldehyde condensate and then treating the strands with a second liquid comprising a halogen-containing polymer and an isocyanate. EP 0 575 088 also suggests water-based liquids for treating and impregnating glass fibers which can be used for the reinforcement of rubber products.
These rubber products have excellent fatigue resistance under heat and a flexing force as well as cold resistance.

When such conventional treatments and methods for treatment are applied to an alkali-free glass (usually E glass) in producing a cord, there is a problem that the cord should have an increased core diameter so as to heighten its initial strength, resulting in impaired resistance to flexural fatigue.

Where high-strength glass filaments having a diameter of from 6 to 8 µm are used, there is a problem that the cost of glass filament formation is high due to the small filament diameter, although the desired strength and resistance to flexural fatigue are obtainable.

### SUMMARY OF THE INVENTION

An object of the present invention is to provide rubber-reinforcing, high-strength glass fibers for which the cost of filament formation is relatively low and which have a coating of a treatment having sufficient heat and water resistance and eliminate the above-described drawbacks of prior art techniques. That is, the bonding strength between the reinforcing fibers and a matrix rubber is so high that even when the reinforced rubber product is used under such conditions that flexing stresses are repeatedly imposed thereon under high load at high temperatures, the reinforcing fibers neither suffer a decrease in strength nor separate from the matrix rubber.

Specifically, the object of the present invention is to improve productivity in filament formation by employing high-strength glass fiber filaments having a diameter larger than 8 µm but not larger than 10 µm and to provide as a final product an inexpensive glass fiber cord for reinforcing a rubber, which has sufficient heat and water resistance and sufficient flexing resistance.

However, when filaments having such a relatively large diameter are combined to form a yarn, there is a problem that this yarn is inferior in flexural fatigue resistance to a yarn comprising the same number of thinner filaments. The present inventor has found that an inexpensive glass fiber cord for reinforcing a rubber, which is equal in flexural fatigue resistance to conventional glass fiber cords comprising thinner high-strength glass fiber filaments and which has high strength and heat and water resistance is obtained by forming a coating layer comprising a resorcinol/formaldehyde condensate and a rubber latex on a strand comprising bound high-strength glass fiber filaments having a diameter larger than 8 µm but not larger than 10 µm, twisting two or more such coated strands together, and optionally forming a second coating layer thereon to form a cord having a diameter of from 0.8 to 1.1 mm.

### DETAILED DESCRIPTION OF THE INVENTION

High-strength glasses usable in the present invention are those having a tensile strength of 300 kg/cm² or higher. Especially preferred are glass fibers having a composition shown in Table 1, which will be given later. For the purpose of comparison, the composition of E glass is also shown in Table 1. Examples of such high-strength glass fibers include K glass fibers and U glass fibers (both manufactured by Nippon Glass Fiber Co., Ltd.), T glass fibers (manufactured by Nitto Boseki Co., Ltd.), R glass fibers (manufactured by Vetrotex Co.), and S glass fibers, S-2 glass fibers, and ZENTRON glass fibers (all manufactured by Owens Corning Fiberglass Corp.).

The glass fiber filaments for use in the present invention have a diameter larger than 8 µm but not larger than 10 µm, which diameter is relatively large for high-strength glass filaments. The diameter the filaments is preferably 9 µm. Thus, the productivity in filament formation is greatly improved as compared with the formation of filaments having a diameter of from 6 to 8 µm.

A coating layer (first coating layer) comprising a resorcinol/formaldehyde condensate and a rubber latex is formed on a strand obtained by binding the filaments.

The resorcinol/formaldehyde condensate (hereinafter referred to as "RF liquid") is not limited in its type, and there can be used, for example, a novolac type, a resol type or a mixed type of those. The molar ratio of resorcinol (R) to formaldehyde (F) is preferably from 1/1 to 1/3. The solid content of the condensate is preferably from 5 to 10% by weight.

Examples of the rubber latex include a vinylpyridine/styrene/butadiene terpolymer (hereinafter referred to as "VP") latex, styrene/butadiene copolymer latex, acrylonitrile/butadiene copolymer latex, butadiene rubber latex, chlorosulfonated polyethylene (hereinafter referred to as "CSM") latex, alkylated chlorosulfonated polyethylene latex, and latex of a highly saturated polymer having nitrile groups. These latexes may be used alone or in combination of two or more thereof.

Especially preferably used among those latexes is either a mixture of a VP latex and a CSM latex or a latex of a highly saturated polymer having nitrile groups, because a glass fiber cord having excellent heat resistance and water resistance can be obtained by the use thereof.

The VP latex/CSM latex mixture can advantageously be used when the proportion among the two latexes and the RF liquid is in such a weight % range that the RF liquid/VP latex/CSM latex ratio is preferably (2-15)/(15-80)/(15-70), more preferably (5-10)/(35-70)/(20-55).

Many terpolymers of this kind which are well known to persons skilled in the art can be used as the VP. Examples the terpolymer include terpolymers comprising 20 to 85% by weight of butadiene, 5 to 70% by weight of styrene, and 5 to 30% by weight of vinylpyridine, and terpolymers comprising about 70% by weight of butadiene, about 15% by weight of styrene, and about 15% by weight of vinylpyridine. Typical VP products commercially available include "Nipol 2518FS", trademark of Nippon Zeon Co., Ltd., "JSR0650", trademark of JSR Corporation INC., and "Pyratex J-1904", trademark of Sumika A & L INC. These are preferably used as a latex having a solid content of about 40 wt%.

CSM is produced by chlorinating polyethylene in the presence of sulfur dioxide, wherein a part of hydrogen atoms in the main chain of polyethylene is replaced with chlorosulfonyl groups (ClSO²-) and chlorine atoms.

Preferred examples of CSM for use in the present invention include those having a chlorine content of 25 to 43% by weight and a sulfur content of 1.0 to 1.5% by weight. These CSM can advantageously be used as a latex having a solid content of, for example, 30 to 60% by weight, and preferably about 40% by weight. A typical, commercially available product of such a latex is "Esprene", manufactured by Sumitomo Chemical Co., Ltd.

A latex of a highly saturated polymer having nitrile groups can advantageously be used when the proportion between the latex and the RF liquid is in such a weight % range that the ratio of the RF liquid to the latex of a highly saturated polymer having nitrile groups is preferably (6-17)/(83-94), and more preferably (7-11) /(89-93). The highly saturated polymer rubber having nitrile groups should have an iodine value of 120 or lower from the standpoints of rubber film strength and adhesion to heat-resistant rubbers. The iodine value thereof is preferably from 0 to 100, and more preferably from 0 to 50. The iodine value is determined in accordance with JIS K0070.

Examples of the highly saturated polymer rubber having nitrile groups include: rubbers obtained from unsaturated nitrile/conjugated diene copolymer rubbers by hydrogenating the conjugated diene unit portion; unsaturated nitrile/conjugated diene/ethylenically unsaturated monomer terpolymer rubbers and rubbers obtained from the terpolymer rubbers by hydrogenating the conjugated diene unit portion; and unsaturated nitrile/ethylenically unsaturated monomer copolymer rubbers. The unsaturated nitrile/ethylenically unsaturated monomer copolymer rubbers may be ones in which an unconjugated diene such as vinylnorbornene, dicyclopentadiene, or 1, 4-hexadiene has been copolymerized in place of part of the unsaturated monomers.

Specific examples of the highly saturated polymer rubber having nitrile groups include: rubbers obtained by hydrogenating butadiene/acrylonitrile copolymer rubbers, isoprene/butadiene/acrylonitrile copolymer rubbers, or isoprene/acrylonitrile copolymer rubbers; rubbers such as butadiene/methyl acrylate/acrylonitrile copolymer rubbers and butadiene/acrylic acid/acrylonitrile copolymer rubbers, and rubbers obtained by hydrogenating these rubbers; and butadiene/ethylene/acrylonitrile copolymer rubbers, butyl acrylate/ethoxyethyl acrylate/vinyl chloroacetate/acrylonitrile copolymer rubbers, and butyl acrylate/ethoxyethyl acrylate/vinylnorbornene/acrylonitrile copolymer rubbers. These rubbers are obtained by conventional polymerization methods and conventional hydrogenation methods.

A preferred example of the above latex is "Zetpol Latex 2020" (trade name; manufactured by Nippon Zeon Co., Ltd.) (latex of a rubber obtained by hydrogenating a butadiene/acrylonitrile copolymer rubber; iodine value, 28).

The coating material described above has a solid content concentration of preferably 10 to 40% by weight, and more preferably 25 to 35% by weight. If the solid content concentration is too low a concentration, glass fiber strands are insufficiently coated therewith. On the other hand, if the solid content concentration is too high, it is difficult to control the coating amount and, hence, it is difficult to obtain uniformly coated strands.

The coating material, which comprises the RF liquid and rubber latex described above as the main components, may optionally contain a base for pH control, e.g., ammonia. The coating material may further contain a stabilizer, an antioxidant, etc.

The treatment method with the coating material (first coating material) according to the present invention is not limited, and conventional methods can be used. In general, glass fiber strands each comprising 200 to 2,000 high-strength glass fiber filaments which have been bound with a size at the stage of spinning are continuously dipped into the coating material. In this dipping, the strands are separately introduced into the coating material or from 2 to 10 strands are arranged and introduced into the coating material. The dipped strands are pulled out and the excess coating material is removed. If desired and necessary, the strands are then dried and wound up. Two or more of the thus-obtained coated glass fiber strands are usually twisted together to obtain a glass fiber cord.

A second coating layer may be formed on the glass fiber cord if desired. This second coating layer is usually formed where the adhesion strength between the first coating layer and a matrix rubber is insufficient.

The second coating layer is formed from a coating material comprising a rubber compound and a vulcanizing agent. Various rubbers can be used as the rubber compound in the second coating material, either alone or in combination of two or more thereof according to the kind of a matrix rubber. For example, where the matrix rubber is a highly saturated polymer having nitrile groups, CSM is effective. Further, where the matrix rubber is a mixed rubber comprising a highly saturated polymer having nitrile groups and a highly saturated polymer having nitrile groups which contains poly(zinc methacrylate) finely dispersed therein, a highly saturated polymer rubber having nitrile groups and a mixed rubber having the same composition are effective. The CSM and the highly saturated polymer rubber having nitrile groups are generally used in the form of a solution in an aromatic hydrocarbon such as benzene, toluene, or xylene, a halogenated hydrocarbon such as trichloroethylene, methyl ethyl ketone (hereinafter referred to as MEK), ethyl acetate, or the like.

Although details of CSM and highly saturated polymer rubbers having nitrile groups are as described above, a highly saturated polymer having nitrile groups and containing fine particles of poly(zinc methacrylate) dispersed therein is on the market under the trade name of "ZSC", which is a product of Nippon Zeon Co., Ltd.

Examples of the vulcanizing agent contained in the second coating material include sulfur, organic peroxides such as dicumyl peroxide and 1,3-bis(t-butylperoxy-m-isopropyl)benzene, and aromatic nitroso compounds such as p-dinitronaphthalene and p-dinitrosobenzene.

Although the second coating material comprises a rubber compound, and a vulcanizing agent as the main components, it may contain an organic diisocyanate, inorganic filler, antioxidant, vulcanization aid, plasticizer, etc., according to need.

Preferred examples of the organic diisocyanate include hexamethylene diisocyanate, isophorone diisocyanate, methylenebis (4-cyclohexyl isocyanate) , toluene diisocyanate, xylene diisocyanate, naphthalene diisocyanate, and methylenebis(phenyl isocyanate). These diisocyanates may be used alone or in combination of two or more thereof. In the case of a diisocyanate for which isomers exist with respect to substituents, such as toluene diisocyanate or methylenebis(phenyl isocyanate), a mixture of the isomers may be used. These organic diisocyanates can be used in a protected form in which the isocyanate groups have been protected with phenol or a lactam. Such a protected-form organic diisocyanate is advantageously used where the second coating material is prepared as a mixture in an aqueous medium, such as an aqueous emulsion.

The second coating material is prepared as a solution or dispersion having a solid content of 3 to 25% by weight, and preferably 5 to 15% by weight. The rubber compound and the vulcanizing agent preferably account for 20 to 60% by weight and 0 to 30 wt%, respectively, of the coating material on a solid basis. The vulcanizing agent is added if desired and necessary, because the rubber compound itself generally contains a vulcanizing agent.

The glass fiber cord having a first coating material is coated with the second coating material in a liquid form generally in a deposition amount of 1 to 10% by weight (preferably 2 to 6% by weight) in terms of the solid content amount thereof based on the glass fiber cord. The second coating material deposited is dried to obtain a glass fiber cord having a second coating layer.

An especially important point in the present invention is that a plurality of strands each having a first coating layer are twisted in such a manner that the glass fiber cord finally obtained having the first layer or the glass fiber cord finally obtained having the first layer and the second coating layer, has a diameter of from 0.8 to 1.1 mm. If the cord diameter is too small, the cord cannot have a satisfactory tensile strength when used under high load, because of the too small number of combined strands. On the other hand, if the cord diameter is too large, the cord is apt to deteriorate when flexing stresses are repeatedly imposed thereon, although the cord has an increased tensile strength.

The present invention will be explained in more detail by reference to the following Examples, but it should be understood that the invention should not be construed as being limited thereto.

### EXAMPLE 1

High-strength glass filaments each having a diameter of 9 µm (composition of U glass fiber: 64.4% (by weight) SiO₂, 24.9% Al₂O₃, 9.7% MgO, 0.2% CaO, 0.2% Na₂O, 0.4% K₂O, 0.2% Fe₂O₃) were formed by spinning. Two hundred such glass filaments were bound with an elastomer size to obtain a glass strand of 22.5 tex. Three such strands were combined and coated with a first coating material having the composition shown in (i) of Table 2 below in a pick up weight of 20% by weight based on the weight of the glass fiber strands. The coated glass fiber bundle was heated at 280°C for 2 minutes.

The glass fiber bundle was primary twisted to 2.1 turns per inch in the Z direction (S direction) . Eight such primary twisted glass fiber bundles were combined and secondary twisted to 2.1 turns per inch in the S direction (Z direction) to obtain a glass fiber cord having a first coating layer.

A second coating material having the composition shown in (a) of Table 3 below was prepared. The glass fiber cord having the first coating layer was coated with this second coating material in such an amount that a pick up weight of the nonvolatile content was 3.0% by weight. The organic solvent was vaporized off to obtain a glass fiber cord having a diameter of 1.0 mm.

The tensile strength of this cord was measured. Thereafter, the cord was cut into pieces each having a length of 40 mm, and the resulting cord pieces were paralleled over a width of 25 mm on each of sheets (30 mm x 40 mm x 1 mm) of the matrix rubbers A and B shown in Table 4 below. These sheets were press-vulcanized for 30 minutes while heating both the front and back sides thereof at 150°C for sheet A and at 160°C for sheet B. With respect to each press-vulcanized sheet, an end of the glass fiber cord and an end of the rubber sheet were separately gripped by clips and pulled apart in the vertical direction to examine the thus-separated surfaces for the state of adhesion.

Further, toothed belts having a width of 19 mm and a length of 980 mm were produced using the same matrix rubbers A and B. Each of the toothed belts was fitted to a running tester equipped with a 6,000 rpm driving motor. A 400 hour high-temperature running test was conducted in a 120°C atmosphere. The tensile strength of each belt after the test was measured, and the proportion of this found tensile strength value to the tensile strength before the test, i.e., the retention of tensile strength, was determined.

The diameter and tensile strength of the cord and the results of evaluation of the state of adhesion to the matrix rubbers and the retention of tensile strength after the running test are shown in Tables 5 and 6 below.

Table 5 shows the evaluation results for the use of matrix rubber A, and Table 6 shows the evaluation results for the use of matrix rubber B.

### EXAMPLE 2

A glass fiber cord having a first coating layer was produced using a coating material having the composition shown in Table 2 (ii) in place of the first coating material used in Example 1. This glass fiber cord was subjected to the same evaluations as in Example 1 without forming a second coating layer thereon. The evaluation results obtained are shown in Tables 5 and 6 below.

### EXAMPLE 3

The glass fiber cord having a first coating layer produced in Example 2 was coated with the same second coating material as in Example 1 to produce a glass fiber cord. This cord was subjected to the same evaluations as in Example 1. The evaluation results obtained are shown in Tables 5 and 6 below.

### EXAMPLE 4

A glass fiber cord was produced in the same manner as in Example 1, except that a second coating material having the composition shown in Table 3 (b) was applied in place of the second coating material used in Example 1. This cord was subjected to the same evaluations as in Example 1. The evaluation results obtained are shown in Tables 5 and 6 below.

### EXAMPLE 5

A glass fiber cord was produced in the same manner as in Example 3, except that the second coating material prepared in Example 4 was applied in place of the second coating material used in Example 3. This cord was subjected to the same evaluations as in Example 1. The evaluation results obtained are shown in Tables 5 and 6 below.

### EXAMPLE 6

A glass fiber cord was produced in the same manner as in Example 1, except that a second coating material having the composition shown in Table 3 (c) was applied in place of the second coating material used in Example 1. This cord was subjected to the same evaluations as in Example 1. The evaluation results obtained are shown in Tables 5 and 6 below.

### EXAMPLE 7

A glass fiber cord was produced in the same manner as in Example 3, except that the second coating material prepared in Example 6 was applied in place of the second coating material used in Example 3. This cord was subjected to the same evaluations as in Example 1. The evaluation results obtained are shown in Tables 5 and 6 below.

### COMPARATIVE EXAMPLE 1

The same glass fiber bundle having a first coating layer as used in Example 1 was primary twisted in the same manner as in Example 1. Eleven such primary twisted bundles were combined and secondary twisted. The other conditions were the same as in Example 1. The evaluation results obtained are shown in Tables 5 and 6 below.

### COMPARATIVE EXAMPLE 2

The same glass fiber bundle having a first coating layer as used in Example 2 was primary twisted in the same manner as in Example 2. Eleven such primary twisted bundles were combined and secondary twisted. The other conditions were the same as in Example 2. The evaluation results obtained are shown in Tables 5 and 6 below.

### COMPARATIVE EXAMPLE 3

The same glass fiber bundle having a first coating layer as used in Example 3 was primary twisted in the same manner as in Example 3. Eleven such primary twisted bundles were combined and secondary twisted. The other conditions were the same as in Example 3. The evaluation results obtained are shown in Tables 5 and 6 below.

### COMPARATIVE EXAMPLE 4

The same glass fiber bundle having a first coating layer as used in Example 4 was primary twisted in the same manner as in Example 4. Eleven such primary twisted bundles were combined and secondary twisted. The other conditions were the same as in Example 4. The evaluation results obtained are shown in Tables 5 and 6 below.

### COMPARATIVE EXAMPLE 5

The same glass fiber bundle having a first coating layer as used in Example 5 was primary twisted in the same manner as in Example 5. Eleven such primary twisted bundles were combined and secondary twisted. The other conditions were the same as in Example 5. The evaluation results obtained are shown in Tables 5 and 6 below.

### COMPARATIVE EXAMPLE 6

The same glass fiber bundle having a first coating layer as used in Example 6 was primary twisted in the same manner as in Example 6. Eleven such primary twisted bundles were combined and secondary twisted. The other conditions were the same as in Example 6. The evaluation results obtained are shown in Tables 5 and 6 below.

### COMPARATIVE EXAMPLE 7

The same glass fiber bundle having a first coating layer as used in Example 7 was primary twisted in the same manner as in Example 7. Eleven such primary twisted bundles were combined and secondary twisted. The other conditions were the same as in Example 7. The evaluation results obtained are shown in Tables 5 and 6 below.

### COMPARATIVE EXAMPLE 8

High-strength glass filaments having a diameter of 7 µm and the same composition were used in place of the high-strength glass filaments having a diameter of 9 µm used in Example 1. A glass fiber bundle having the same first coating layer as in Example 1 was prepared and primary twisted in the same manner as in Example 1. Eleven such primary twisted bundles were combined and secondary twisted. The other conditions were the same as in Example 1. The evaluation results obtained are shown in Tables 5 and 6 below.

### COMPARATIVE EXAMPLE 9

Alkali-free glass filaments having a diameter of 9 µm (composition of E glass fiber: 54.9% (by weight) SiO₂, 14.2% Al₂O₃, 2.0% MgO, 23.0% CaO, 0.44% Na₂O, 0.18% K₂O, 5.89% B₂O₃, 0.19% Fe₂O₃) were used in place of the high-strength glass filaments having a diameter of 9 µm used in Example 1. A glass fiber bundle having the same first coating layer as in Example 1 was prepared and primary twisted in the same manner as in Example 1. Eleven such primary twisted bundles were combined and secondary twisted. The other conditions were the same as in Example 1. The evaluation results obtained are shown in Tables 5 and 6 below.

**Table 1**

| Compositions of glasses | | (unit: wt%) |
|---|---|---|
| Component | High-strength glass | E glass |
| SiO₂ | 58-70 | 52-56 |
| Al₂O₃ | 17-27 | 12-16 |
| MgO | 7-17 | 0-6 |
| CaO | 0-10 | 12-25 |
| Na₂O | 0-2 | 0-0.8 |
| K₂O | 0-2 | |
| B₂O₃ | 0-2 | 8-13 |
| | Impurities, e.g., Fe₂O₃ and TiO₂, are contained | |

**Table 2**

| Compositions of first coating materials (unit: parts by weight) | | |
|---|---|---|
| (i) | RF liquid (R/F = 1/1.5, 8 wt% ∗1) | 30 |
| | VP latex (Nipol 2518FS, 40 wt% ∗1) | 45 |
| | CSM latex (Esprene 200, 40 wt% ∗1) | 20 |
| | 25% Ammonia water | 1 |
| | Water | 4 |
| (ii) | RF liquid (R/F = 1/1.5, 8 wt% ∗1) | 30 |
| | Latex of highly saturated polymer rubber having nitrile groups (Zetpol Latex 2020, 40 wt% ∗1) | 65 |
| | 25% Ammonia water | 1 |
| | Water | 4 |

| | | |
|---|---|---|
| ∗1: Solid content | | |

**Table 3**

| Compositions of second coating materials (unit: parts by weight) | | |
|---|---|---|
| (a) | Methylenebis(4-phenyl isocyanate) | 4.5 |
| | CSM (trade name, TS-340; manufactured by Tosoh Corp.; chlorine content, 43 wt%; sulfur content, 1.1 wt%) | 5.25 |
| | p-Dinitrosobenzene | 2.25 |
| | Carbon black | 3.0 |
| | Xylene/trichloroethylene (1.5/1.0) mixed solvent | 85.0 |
| (b) | Rubber compound A (described in Table 4) | 105 |
| | Toluene | 416 |
| | MEK | 180 |
| | Toluene diisocyanate | 50 |
| (c) | Rubber compound B (described in Table 4) | 105 |
| | Toluene | 416 |
| | MEK | 180 |
| | Toluene diisocyanate | 50 |

**Table 4**

| Composition of matrix rubber (unit: parts by weight) | | |
|---|---|---|
| Formulation | A | B |
| Zetpol 2020*1 | 100 | 70 |
| ZSC2295N *2 | - | 30 |
| Zinc white #1 | 5 | 10 |
| Stearic acid | 1 | 1 |
| HAF carbon | 60 | 30 |
| Trioctyl trimellitate | 10 | 5 |
| 4,4-(α,α-Dimethylbenzyl)diphenylamine | 1.5 | - |
| 2-Mercaptobenzimidazole zinc salt | 1.5 | - |
| Sulfur | 0.5 | 0.1 |
| Tetramethylthiuram sulfide | 1.5 | - |
| Cyclohexylbenzothiazylsulfenamide | 1 | - |
| Vul-kup40KE *3 | - | 6 |

| | | |
|---|---|---|
| *1: Manufactured by Nippon Zeon Co., Ltd. | | |
| *2 : Manufactured by Nippon Zeon Co., Ltd. | | |
| *3 : 1,3-Bis(t-butylperoxyisopropyl)benzene manufactured by Hercules Inc. | | |

**Table 5**

| Evaluation results for the use of matrix rubber A | | | | | | | |
|---|---|---|---|---|---|---|---|
| | Number of strands and bundles combined | First coating material | Second coating material | Cord Diameter (mm) | Tensile strength (kgf/cord) | State of adhesion | Retention of tensile strength after running test (%) |
| Ex. 1 | 3/8 | i | a | 1.00 | 115 | Rubber failure | 85 |
| Comp. Ex. 1 | 3/11 | | | 1.22 | 145 | | 70 |
| Comp. Ex. 8 U-7 µm | 3/11 | | | 1.08 | 112 | | 85 |
| Comp. Ex. 9 E-9 µm | 3/11 | | | 1.15 | 95 | | 71 |
| Ex. 2 | 3/8 | ii | None | 0.95 | 108 | Partial rubber failure | 65 |
| Comp. Ex. 2 | 3/11 | | | 1.15 | 130 | | 45 |
| Ex. 3 | 3/8 | ii | a | 1.02 | 112 | Rubber failure | 75 |
| Comp. Ex. 3 | 3/11 | | | 1.30 | 140 | | 40 |
| Ex. 4 | 3/8 | i | b | 1.00 | 114 | Rubber failure | 85 |
| Comp. Ex. 4 | 3/11 | | | 1.20 | 145 | | 40 |
| Ex. 5 | 3/8 | ii | b | 1.02 | 109 | Rubber failure | 80 |
| Comp. Ex. 5 | 3/11 | | | 1.30 | 140 | | 40 |
| Ex. 6 | 3/8 | i | c | 1.00 | 117 | Rubber failure | 85 |
| Comp. Ex. 6 | 3/11 | | | 1.20 | 145 | | 40 |
| Ex. 7 | 3/8 | ii | c | 1.02 | 110 | Rubber failure | 80 |
| Comp. Ex. 7 | 3/11 | | | 1.30 | 139 | | 45 |

**Table 6**

| Evaluation results for the use of matrix rubber B | | | | | | | |
|---|---|---|---|---|---|---|---|
| | Number of strands and bundles combined | First coating material | Second coating material | Cord Diameter (mm) | Tensile strength (kgf/cord) | State of adhesion | Retention of tensile strength after running test (%) |
| Ex. 1 | 3/8 | i | a | 1.00 | 115 | Interfacial peeling | 40 |
| Comp. Ex. 1 | 3/11 | | | 1.22 | 145 | | 30 |
| Comp. Ex. 8 U-7 µm | 3/11 | | | 1.08 | 112 | | 42 |
| Comp. Ex. 9 E-9 µm | 3/11 | | | 1.15 | 95 | | 28 |
| Ex. 2 | 3/8 | ii | None | 0.95 | 108 | Partial rubber failure | 60 |
| Comp. Ex. 2 | 3/11 | | | 1.15 | 130 | | 45 |
| Ex. 3 | 3/8 | ii | a | 1.02 | 112 | Interfacial peeling | 80 |
| Comp. Ex. 3 | 3/11 | | | 1.30 | 140 | | 45 |
| Ex. 4 | 3/8 | i | b | 1.00 | 114 | Partial rubber failure | 65 |
| Comp. Ex. 4 | 3/11 | | | 1.20 | 145 | | 40 |
| Ex. 5 | 3/8 | ii | b | 1.02 | 109 | Partial rubber failure | 80 |
| Comp. Ex. 5 | 3/11 | | | 1.30 | 140 | | 35 |
| Ex. 6 | 3/8 | i | c | 1.00 | 117 | Rubber failure | 65 |
| Comp. Ex. 6 | 3/11 | | | 1.20 | 145 | | 40 |
| Ex. 7 | 3/8 | ii | c | 1.02 | 110 | Rubber failure | 80 |
| Comp. Ex. 7 | 3/11 | | | 1.30 | 139 | | 50 |

The glass fiber cord according to the present invention has advantages that the productivity in spinning is high because of the use of high-strength glass fiber filaments having a diameter of more than 8 to 10 µm, and that the glass fiber cord obtained after twisting has excellent flexing resistance because its diameter is 0.8 to 1.1 mm. By applying a combination of first and second coating layers to such a cord constitution, a high-strength glass fiber cord for reinforcing a rubber can be provided which, even when used under such conditions that flexing stresses are repeatedly imposed thereon under high load at high temperatures, suffers little decrease in strength and does not separate from the matrix rubber, and which has high strength and sufficient heat and water resistance.

## Claims

1. A glass fiber cord for reinforcing a rubber, having a cord diameter of 0.8 to 1.1 mm, said cord being obtained by binding a plurality of high-strength glass fiber filaments each having a diameter larger than 8 µm but not larger than 10 µm to obtain a strand, forming on the strand a coating layer comprising a resorcinol/formaldehyde condensate and a rubber latex, and twisting two or more such coated strands together.

2. A glass fiber cord for reinforcing a rubber, having a cord diameter of 0.8 to 1.1 mm, said cord being obtained by binding a plurality of high-strength glass fiber filaments each having a diameter larger than 8 µm but not larger than 10 µm to obtain a strand, forming on the strand a first coating layer comprising a resorcinol/formaldehyde condensate and a rubber latex, twisting two or more such coated strands together to obtain a cord, and forming on the resulting cord a second coating layer comprising a rubber compound and a vulcanizing agent.

3. The glass fiber cord as claimed in claim 1 or 2, wherein said rubber latex is at least one member selected from the group consisting of vinylpyridine/styrene/butadiene terpolymer latex, styrene/butadiene copolymer latex, acrylonitrile/butadiene copolymer latex, butadiene rubber latex, chlorosulfonated polyethylene latex, alkylated chlorosulfonated polyethylene latex, and latex of highly saturated polymer having nitrile groups.

4. The glass fiber cord as claimed in claim 3, wherein said rubber latex is a mixture of vinylpyridine/styrene/butadiene terpolymer latex and a chlorosulfonated polyethylene latex.

5. The glass fiber cord as claimed in claim 3, wherein said rubber latex is a latex of a highly saturated polymer having nitrile groups.

6. The glass fiber cord as claimed claim 2, wherein said rubber compound in the second coating layer is a highly saturated polymer having nitrile groups, a highly saturated polymer having nitrile groups which contains poly(methacrylic acid) finely dispersed therein, or a chlorosulfonated polyethylene.

## Patentansprüche

1. Glasfaserschnur zum Verstärken eines Gummis mit einem Schnurdurchmesser von 0,8 bis 1,1 mm, wobei die Schnur erhalten wird durch Verbinden einer Mehrzahl von hochfesten Glasfaserfilamenten mit jeweils einem Durchmesser von größer als 8 *µ*m, aber nicht größer als 10 *µ*m, wobei ein Strang erhalten wird, Bilden auf dem Strang einer Beschichtung umfassend ein Resorcinol/Formaldehyd-Kondensat und einen Kautschuklatex, und gemeinsames Verdrehen von zwei oder mehreren solcher beschichteter Stränge.

2. Glasfaserschnur zum Verstärken eines Gummis mit einem Schnurdurchmesser von 0,8 bis 1,1 mm, wobei die Schnur erhalten wird durch Verbinden einer Mehrzahl von hochfesten Glasfaserfilamenten mit jeweils einem Durchmesser von größer als 8 *µ*m, aber nicht größer als 10 *µ*m, wobei ein Strang erhalten wird, Bilden auf dem Strang einer Beschichtung umfassend ein Resorcinol/Formaldehyd-Kondensat und einen Kautschuklatex, und gemeinsames Verdrehen von zwei oder mehreren solcher beschichteten Stränge, wobei eine Schnur erhalten wird, und Bilden auf der resultierenden Schnur einer zweiten Beschichtung umfassend eine Kautschukverbindung und ein Vulkanisierungsmittel.

3. Glasfaserschnur gemäß Anspruch 1 oder 2, wobei der Kautschuklatex mindestens ein Vertreter, ausgewählt aus der Gruppe bestehend aus Vinylpyridin/Styrol/Butadien-Terpolymerlatex, Styrol/Butadien-Copolymerlatex, Acrylnitril/Butadien-Copolymerlatex, Butadienkautschuklatex, chlorsulfoniertes Polyethylenlatex, alkyliertes chlorsulfoniertes Polyethylenlatex, und Latex eines hochgesättigten Polymers mit Nitril-Gruppen ist.

4. Glasfaserschnur gemäß Anspruch 3, wobei der Kautschuklatex eine Mischung von Vinylpyridin/Styrol/Butadien-Terpolymerlatex und einem chlorsulfonierten Polyethylenlatex ist.

5. Glasfaserschnur gemäß Anspruch 3, wobei der Kautschuklatex ein Latex eines hochgesättigten Polymers mit Nitril-Gruppen ist.

6. Glasfaserschnur nach Anspruch 2, wobei die Kautschukverbindung in der zweiten Beschichtung ein hochgesättigtes Polymer mit Nitril-Gruppen, eine hochgesättigtes Polymer mit Nitril-Gruppen, das hierin feindispergiert Poly(methacrylsäure) enthält, oder ein chlorsulfoniertes Polyethylen ist.

## Revendications

1. Fil câblé en fibre de verre pour renforcer un caoutchouc, ayant un diamètre de fil câblé de 0,8 à 1,1 mm, ledit fil câblé étant obtenu en liant plusieurs filaments de fibre de verre très résistants ayant chacun un diamètre supérieur à 8 µm mais non supérieur à 10 µm pour obtenir un brin, en formant sur le brin une couche d'enrobage comprenant un condensat résorcinol/formaldéhyde et un latex de caoutchouc et en tordant ensemble deux tels brins enrobés ou plus.

2. Fil câblé en fibre de verre pour renforcer un caoutchouc, ayant un diamètre de fil câblé de 0,8 à 1,1 mm, ledit fil câblé étant obtenu en liant plusieurs filaments de fibre de verre très résistants ayant chacun un diamètre supérieur à 8 µm mais non supérieur à 10 µm pour obtenir un brin, en formant sur le brin une première couche d'enrobage comprenant un condensat résorcinol/formaldéhyde et un latex de caoutchouc, en tordant ensemble deux tels brins enrobés ou plus pour obtenir un fil câblé, et en formant sur le fil câblé obtenu une seconde couche d'enrobage comprenant un mélange de caoutchouc et un agent vulcanisant.

3. Fil câblé en fibre de verre selon la revendication 1 ou 2, dans lequel ledit latex de caoutchouc est au moins un élément choisi dans le groupe constitué par un latex de terpolymère vinylpyridine/styrène/butadiène, un latex de copolymère styrène/butadiène, un latex de copolymère acrylonitrile/butadiène, un latex de caoutchouc butadiène, un latex de polyéthylène chlorosulfoné, un latex de polyéthylène chlorosulfoné alkylé et un latex de polymère très saturé ayant des groupes nitriles.

4. Fil câblé en fibre de verre selon la revendication 3, dans lequel ledit latex de caoutchouc est un mélange d'un latex de terpolymère vinylpyridine/styrène/butadiène et d'un latex de polyéthylène chlorosulfoné.

5. Fil câblé en fibre de verre selon la revendication 3, dans lequel ledit latex de caoutchouc est un latex de polymère très saturé ayant des groupes nitriles.

6. Fil câblé en fibre de verre selon la revendication 2, dans lequel ledit mélange de caoutchouc dans la seconde couche d'enrobage est un polymère très saturé ayant des groupes nitriles, un polymère très saturé ayant des groupes nitriles contenant, en fine dispersion, de l'acide polyméthacrylique ou un polyéthylène chlorosulfoné.
